# EUROPÄISCHE PATENTANMELDUNG

(11) **EP 2 163 293 A1**
(43) Veröffentlichungstag der Anmeldung: **17.03.2010**
(21) Anmeldenummer: 09010917.4
(22) Anmeldetag: 26.08.2009
(51) Int. Cl.: B01D 53/14

(54) **Verfahren zum Heraustrennen von Kohlendioxid aus Gasgemischen, vorzugsweise Biogas, und Vorrichtung zur Durchführung des Verfahrens**

(30) Priorität: 03.09.2008 DE 102008045499
(71) Anmelder: Bwe biogas-weser-ems GmbH & Co. KG, 26169 Friesoythe (DE)
(72) Erfinder: Siegmund, R. Fröhlich, Prof., 26129 Oldenburg (DE); Liebenstein, Alexander, 49377 Vechta (DE); Schröder, Henning, 28816 Stuhr (DE); Hanneken, Nicolaus, 26169 Friesoythe (DE); Gehlenborg, Johannes, 26203 Wardenburg (DE)
(74) Vertreter: Jabbusch, Matthias

(57) **Zusammenfassung**

Bei einem Verfahren zum Heraustrennen von Kohlendioxid aus Gasgemischen, insbesondere aus in Biogasanlagen gewonnenem Nutzgas, vorzugsweise Biogas, ist vorgesehen, dass das Gasgemisch einer Wäsche mit einer konzentrierten Amin-Waschflüssigkeit unterworfen wird und anschließend das in der Waschflüssigkeit aufgenommene Kohlendioxid aus der Waschflüssigkeit herausgelöst wird.

Eine Vorrichtung vorzugsweise zum Durchführen des Verfahrens zeichnet sich dadurch aus, dass zum Herauslösen des Kohlendioxids aus einer Waschflüssigkeit für das Gasgemisch eine Vakuumkammer vorgesehen ist.

## Beschreibung

Aus pflanzlichen und tierischen Abfällen können Biogase gewonnen werden. Gewonnene Biogase können zum Betrieb von Heizanlagen eingesetzt werden, sie können aber auch verstromt werden.

Damit ein Biogas oder ein anderes Gasgemisch erdgasähnliche Eigenschaften hat, ist aus dem Gasgemisch enthaltenes Kohlendioxid zu entfernen. Bei aus Biogasanlagen gewonnenen Biogasen sind bis ca. 50 % der Gasanteile Kohlendioxid, welche eine energetische Verwertung des Biogases erschweren.

Um den Anteil von Kohlendioxid an Biogasen oder anderen, wie Reformationsgasen aus Hüllenprozessen, Gasgemischen zu reduzieren, sind bereits gattungsgemäße Verfahren vorgeschlagen worden, so in der DE 10 2005 051 952 B3. Dort wird eine wäßrige Lösung eingesetzt, welche Anteile von Aminen enthält. Amine binden das Kohlendioxid, daneben ist auch das Wasser ein guter Speicher für Kohlendioxid. Das Kohlendioxid aus der wäßrigen Lösung herauszulösen, ist aber schwierig, hohe Temperaturen, hohe Drücke sind erforderlich. Darüber hinaus weist die Vorrichtung für das bekannte Verfahren zumindest vier Wärmetauscher auf, so daß der apparative Aufwand hoch ist.

Der Erfindung liegt die Aufgabe zugrunde, ein Verfahren sowie eine Vorrichtung der eingangs genannten Gattung aufzuzeigen, mit der mit einem geringeren apparativen und energetischem Aufwand ein zufriedenstellendes und kostengünstiges Herauslösen von Kohlendioxid aus Biogasen oder anderen Gasgemischen möglich ist.

Diese Aufgabe ist verfahrensgemäß dadurch gelöst, daß das Gasgemisch einer Wäsche mit einer konzentrierten Amin-Waschflüssigkeit unterworfen wird und anschließend das in der Waschflüssigkeit aufgenommene Kohlendioxid aus der Waschflüssigkeit herausgelöst wird.

Bei dem erfindungsgemäßen Verfahren wird somit keine wäßrige Lösung eingesetzt. Die für das Herauslösen von Kohlendioxid aus dem Wasser gegebenen Probleme treten somit bei dem erfindungsgemäßen Verfahren nicht auf. Eine Vorrichtung für das erfindungsgemäße Verfahren kann beispielsweise mit einem Wärmetauscher betrieben werden.

Durch die konzentrierte Amin-Waschflüssigkeit gelingt ein Herauslösen des Kohlendioxides aus dem Gasgemisch, beispielsweise aus Biogas insoweit, daß in das Gasnetz eingespeiste Biomethan 96 % Methan enthält. Von der Waschflüssigkeit können pro Kilogramm Waschflüssigkeit 100 bis 150 g Kohlendioxid aufgenommen werden.

Das Kohlendioxid wird in einem zweiten Schritt aus der Waschflüssigkeit wieder entfernt, die Waschflüssigkeit kann dann erneut in den Prozeß eingeführt werden und wieder zur Wäsche des Gasgemisches verwendet werden.

Als Waschflüssigkeit werden vorzugsweise Amine mit einem geringen Teil Wasser verwendet. Der geringe Anteil an Wasser dient dazu, die konzentrierten Amine fließfähig zu halten, damit sie in der Prozeßapparatur bewegt werden können.

Das erfindungsgemäße Verfahren zeichnet sich vorzugsweise dadurch aus, daß die Wäsche des Gasgemisches in einer Umgebung mit normalen Druckverhältnissen durchgeführt wird. Ein erhöhter Druck ist somit nicht erforderlich, der apparative Aufwand für eine Waschsäule ist erleichtert und dadurch preiswerter.

Für das Herauslösen des Kohlendioxides aus der Waschflüssigkeit sieht eine Weiterbildung des erfindungsgemäßen Verfahrens vor, daß das Kohlendioxid aus der Waschflüssigkeit in einer Vakuumumgebung herausgelöst wird. Während im Stand der Technik für das Herauslösen des Kohlendioxid aus wäßrigen Lösungen Überdrücke bis zu 30 bar aufzubauen sind, ist nach dem erfindungsgemäßen Verfahren ein leichter handhabbares Vakuum zur Verfügung zu stellen. In diesem Vakuum erfolgt z.B. in einem Stripp-Prozeß das Herauslösen des Kohlendioxids. Auch Schwefelwasserstoff wird auf diese Weise aus der Waschflüssigkeit entnommen, sofern diese Verbindung von der Waschflüssigkeit aus dem Gasgemisch entnommen wurde.

Eine Vakuumumgebung wird auf kleiner als 1 bar eingestellt. Die Temperatur der Regeneration liegt bei etwa 120°C - 160°C.

Die vorrichtungsseitige Lösung der Aufgabe ist **dadurch gekennzeichnet, daß** zum Herauslösen des Kohlendioxids aus einer Waschflüssigkeit für das Gasgemisch eine Vakuumkammer vorgesehen ist. In der Vorrichtung wird somit die Vakuumkammer vorgehalten, mit der das Strippen der Waschflüssigkeit in der Vakuumumgebung durchgeführt wird.

Für das Auswaschen des Kohlendioxids aus dem Gasgemisch ist eine übliche apparative Vorrichtung verwendbar.

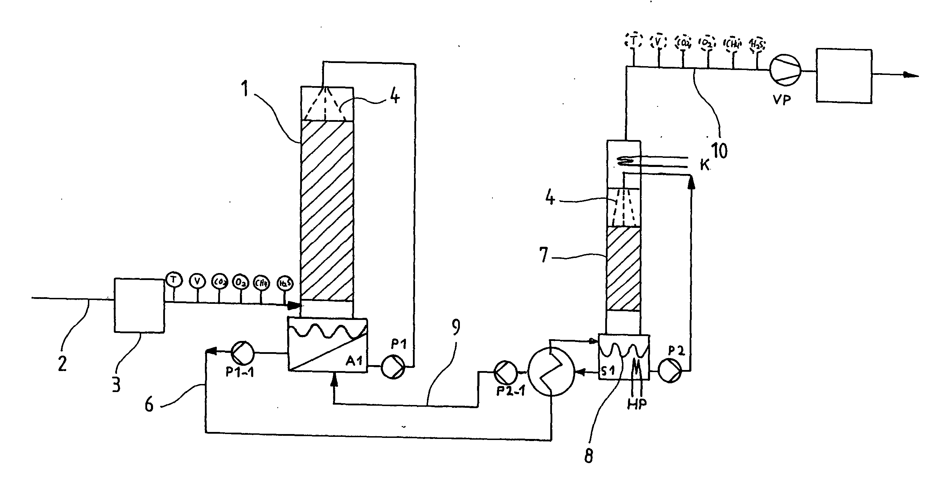

Ein Ausführungsbeispiel der erfindungsgemäßen Vorrichtung zur Durchführung des erfindungsgemäßen Verfahrens ist in der Zeichnung dargestellt. Die einzige Figur der Zeichnung zeigt eine schematische Ansicht des apparativen Aufbaus der Vorrichtung.

Die Vorrichtung weist eine in Normaldruckbedingungen gehaltene Waschsäule 1 für ein Gasgemisch auf. Das Gasgemisch wird über eine Zuleitung 2 in die Waschsäule 1 eingeführt, in dem Verlauf der Zuleitung 2 kann eine H₂S-Eliminationseinrichtung eingesetzt sein.

In der Waschsäule 1 wird von oben eine Waschflüssigkeit 4 aus konzentrierten Aminen eingeführt. Mit der Waschflüssigkeit 4 wird aus dem Gasgemisch Kohlendioxid entfernt.

Durch die Waschsäule 1 hindurchgelaufene Waschflüssigkeit 4 wird am Fuße der Waschsäule 1 aufgefangen und über eine Leitung 6 einer Regeneration zugeführt. In dieser Regeneration wird die Waschflüssigkeit 4 wieder für einen nächsten Waschprozeß vorbereitet, indem das aufgenommene Kohlendioxid aus der Waschflüssigkeit 4 entfernt wird. Das Herauslösen des Kohlendioxids aus der Waschflüssigkeit 4 erfolgt in einer Vakuumkammer 7. In der Vakuumkammer 7 wird ein Unterdruck bereitgestellt, dem die Waschflüssigkeit 4 ausgesetzt wird. Die Vakuumkammer 7 ist mit einer Heizung 8 ausgerüstet. Gereinigte Waschflüssigkeit 4 wird über eine Leitung 9 zur Waschsäule 1 zurückgeführt.

Das vom Kohlendioxid befreite Waschmedium wird entlang einer Leitung 9 wieder der Waschsäule 1 einer Einspeisung zugeführt. Das in der Vakuumkammer 7 herausgelöste Kohlendioxid-Gas kann über die Leitung 10 daneben optional einer Aufbereitung und Verwertung zugeführt werden.

## Patentansprüche

1. Verfahren zum Heraustrennen von Kohlendioxid aus Gasgemischen, insbesondere aus in Biogasanlagen gewonnenem Nutzgas, vorzugsweise Biogas,
**dadurch gekennzeichnet,**
**daß** das Gasgemisch einer Wäsche mit einer konzentrierten Amin-Waschflüssigkeit (4) unterworfen wird und anschließend das in der Waschflüssigkeit (4) aufgenommene Kohlendioxid aus der Waschflüssigkeit (4) herausgelöst wird.

2. Verfahren nach Anspruch 1 , **dadurch gekennzeichnet, daß** die Wäsche des Gasgemisches in einer Umgebung mit normalen Druckverhältnissen durchgeführt wird.

3. Verfahren nach einem der vorhergehenden Ansprüche, **dadurch gekennzeichnet, daß** das Kohlendioxid aus der Waschflüssigkeit (4) in einer Vakuumumgebung herausgelöst wird.

4. Verfahren nach Anspruch 3, **dadurch gekennzeichnet, daß** der Druck in der Vakuumumgebung < 1 bar eingestellt wird.

5. Verfahren nach einem der Ansprüche 3 oder 4, **dadurch gekennzeichnet, daß** die Temperatur in der Vakuumumgebung auf etwa 120° C - 160° C eingestellt wird.

6. Verfahren nach einem der Ansprüche 3 bis 5, **dadurch gekennzeichnet, daß** die Waschflüssigkeit (4) nach Herauslösen des Kohlendioxids wieder verwendet wird.

7. Vorrichtung zum Heraustrennen von CO₂ aus Gasgemischen, vorzugsweise Biogas, **dadurch gekennzeichnet, daß** zum Herauslösen des CO₂ aus einer Waschflüssigkeit (4) für das Gasgemisch eine Vakuumkammer (7) vorgesehen ist.
